# EUROPEAN PATENT SPECIFICATION

(11) **EP 0 253 152 B1**
(45) Date of publication and mention of the grant of the patent: **08.12.1993**
(21) Application number: 87108811.8
(22) Date of filing: 19.06.1987
(51) Int. Cl.: F21V 17/02, F21P 5/00

(54) **Lens carrier**
Linsenhalterung
Dispositif support de lentille

(30) Priority: 16.07.1986 US 887372
(43) Date of publication of application: 20.01.1988
(73) Proprietor: VARI-LITE, INC.(a Delaware corporation), Dallas Texas 75247 (US)
(72) Inventor: Bornhorst, James M., Dallas Texas 75137 (US)
(74) Representative: UEXKÜLL & STOLBERG

(56) References cited:
- US-A- 2 006 125
- US-A- 2 380 829
- US-A- 3 088 370

## Description

### TECHNICAL FIELD

This invention relates to mounting a lens in an optical device, and more particularly to adjustably mounting a lens in a stage light.

### BACKGROUND ART

In a modern stage light, it is often desirable to mount an optical lens for limited movement within the light to vary the nature of the light beam emanating from the light. For example, use of a gobo silhouette within the light requires movement of the optical lens to focus the silhouette pattern on the backdrop at the stage.

In designing a lens carrier to carry a lens for movement within the light, several factors are critical. First, the lens must be maintained in the proper orientation in the light path to avoid distortion. The lens carrier must be compact enough to fit within the light, which in itself may contain a large number of components to perform various functions while minimizing the exterior dimensions of the light. Finally, cost effectiveness is of critical concern. A need therefore exists for a light carrier which is capable of satisfying these requirements.

Various adjustable lens mounting assemblies have been proposed that allow a lens to be mounted within an optical device for limited movement relative to the lamp axis. See, e.g., U.S. Patent No. 3,088,370 to Erbe et al., and U.S. Patent No. 2,006,125 to Barber. Unfortunately, accurate lens alignment in many prior arrangements is highly dependent on the precise machining of the slidable cylindrical surfaces and other components, and the selection of precisely dimensioned ball bearings. As a result, these designs are labor intensive and thus, prohibitively expensive to construct.

### SUMMARY OF THE INVENTION

In accordance with the present invention, a lens carrier for supporting a lens on a lamp structure in alignment with a lamp axis and for guiding the lens for limited movement along the lamp axis while maintaining alignments is provided, comprising:
a first member secured to the lamp structure and defining a cylindrical exterior surface centered on the lamp axis said exterior surface being defined at a first radius from the lamp axis;
a second member defining a cylindrical interior surface defined about a center line at a second radius, the lens being mounted on the second member with the optical axis of the lens coincident with the center line of the cylindrical interior surface;
a bearing assembly having first and second ball retaining rings positioned between the cylindrical surfaces of the first and second members, the ball retaining rings being spaced apart along the length of the surfaces to align the lens with the lamp axis and guide the lens and second member for limited movement along the lamp axis relative to the first member while maintaining alignment;
   said lens carrier being characterized by:
   said ball retaining rings having a plurality of ball bearings positioned between the cylindrical surfaces of the first and second members; and
   said ball bearings being resiliently deformable and having a diameter slightly greater than the difference between the second and first radii to cause resilient deformation of the ball bearings between the cylindrical surfaces of the first and second members.

### BRIEF DESCRIPTION OF THE DRAWINGS

A more complete understanding of the invention can be had by referring to the following Detailed Description taken with the accompanying Drawings, wherein:
FIGURE 1 is an exploded view of the lens carrier illustrating the cooperation of the elements therein; and
FIGURE 2 is a cross sectional side view of the lens carrier.

### DETAILED DESCRIPTION

Referring now to the drawings, wherein like reference numerals designate like or corresponding parts throughout the several views, there is illustrated a lens carrier 10 forming a first embodiment of the present invention. The lens carrier forms part of a stage light such as disclosed in copending patent application serial no. 87106116.4 which disclosure is hereby incorporated by reference. A linear actuator, such as that shown in the referenced patent application, is used to control movement of the lens along the lamp axis 12.

The lens carrier 10 includes a first member 14 which is secured to the structure of the lamp at a rim 16. The first member 14 also defines a cylindrical portion 18 defining an exterior cylindrical surface 20 which is centered on a lamp axis 12 at a first radius, Ri, from the lamp axis 12.

A second member 22 is provided which has a generally cylindrical shape defining a cylindrical interior surface 24. The cylindrical interior surface 24 is defined about a center axis at a radius R₂. A lens 26 is mounted at one end of the second member 22 with the optical axis of the lens coincident with the center line of the cylindrical interior surface 24. A bracket 27 is mounted on the exterior of second member 22 for receiving one end of a linear actuator (not shown) acting between the lamp structure and second member 22 to move the lens 26 back and forth along axis 12.

A bearing assembly 28 supports the second member 22 and lens 26 on the first member 14 with the optical axis of the lens coincident with the lamp axis 12 and permits this alignment to be maintained as the linear actuator acting between the lamp structure and the bracket 27 moves the second member and the lens along the lamp axis 12.

The bearing assembly 28 has a first ball retaining ring 30 and second ball retaining ring 32 which are spaced from each other along the length of the lamp axis 12. Each of the rings 30 and 32 has a plurality of ball bearings 34 mounted about the circumference of supports 35. The ball bearings roll along the cylindrical surfaces 20 and 24 when the second member 22 is moved relative to the first member 14.

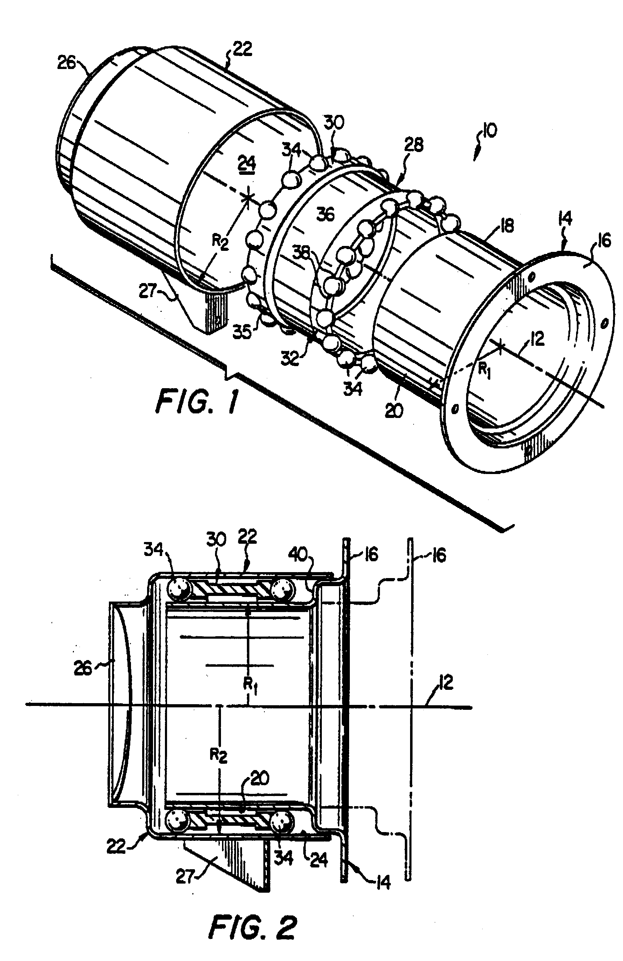

In the preferred embodiment, the first and second ball retaining rings 30 and 32 are combined into an integral structure with a cylindrical interconnecting member 36 as shown in FIGURES 1 and 2. However, the rings can be separate, so long as sufficient distance exists between the rings to ensure a proper alignment of the lens relative to lamp axis 12 during the entire range of motion of the lens along the lamp axis.

In the preferred embodiment, the individual ball bearings 34 are formed of a resilient deformable material and have a diameter slightly greater than the difference between radius R₂ and R₁. Thus, when the ball bearings are positioned between the cylindrical surfaces 20 and 24, the ball bearings are slightly deformed to insure intimate contact between the cylindrical surfaces and the bearings to provide an accurate alignment of the lens on the lamp axis. For example, the ball bearings can be formed of nylon with a diameter about 0.05 mm (0.002 inches) larger than the difference between the radius R₂ and R₁ to provide the proper resilient deformation.

In a preferred embodiment, the bearings supports 35 and intermediate member 36 are also formed of a resilient material. In particular, each of the bearing supports 35 defines cooperating pairs of resilient bearing hooks 38 which surround each of the ball bearings 34 and hold them in place on the rings.

As best seen in FIGURE 2, the first member can have an inwardly directed annular surface 40 which acts as a stop for movement of the bearing assembly 28 in the direction toward rim 16. If desired, stops can be positioned between the members to positively limit the motion between the first and second members. However, the linear actuator acting through the bracket 27 will commonly define the range of movement of the second member and lens relative to the first member by the limits of the actuator movement.

## Claims

1. A lens carrier (10) for supporting a lens (26) on a lamp structure in alignment with a lamp axis (12) and for guiding the lens (26) for limited movement along the lamp axis (12) while maintaining alignment, comprising:
a first member (14) secured to the lamp structure and defining a cylindrical exterior surface (20) centered on the lamp axis (12), said exterior surface (20) being defined at a first radius (Ri) from the lamp axis (12);
a second member (22) defining a cylindrical interior surface (24) defined about a center line at a second radius (R₂), the lens (26) being mounted on the second member (22) with the optical axis of the lens (26) coincident with the center line of the cylindrical interior surface (24);
a bearing assembly (28) having first and second ball retaining rings (30, 32) positioned between the cylindrical surfaces (20, 24) of the first and second members (14, 22), the ball retaining rings (30, 32) being spaced apart along the length of the surfaces (20, 24) to align the lens (26) with the lamp axis (12) and guide the lens (26) and second member (22) for limited movement along the lamp axis (12) relative to the first member (14) while maintaining alignment;
said lens carrier being characterized by:
said ball retaining rings (30, 32) having a plurality of ball bearings (34) positioned between the cylindrical surfaces (20, 24) of the first and second members (14, 22); and
said ball bearings (34) being resiliently deformable and having a diameter slightly greater than the difference between the second and first radii (R₂, R, ) to cause resilient deformation of the ball bearings (34) between the cylindrical surfaces (20, 24) of the first and second members (14, 22).

2. The lens carrier (10) of Claim 1 wherein said first and second ball retaining rings (30, 32) are formed as an integral unit.

3. The lens carrier (10) of Claim 1 wherein each of said first and second ball retaining rings (30, 32) includes resilient ball bearing retaining structure for holding the ball bearings (34).

4. The Lens Carrier (10) of Claim 1 wherein said plurality of ball bearings (34) roll along the cylindrical surfaces (20, 24) as the second member (22) is moved relative to the first member (14), maintaining alignment of the lens (26) and second member (22) along the lamp axis (12).

5. The lens carrier (10) of Claim 1 wherein said ball bearings (34) are formed of nylon.

6. The lens carrier (10) of Claim 1 wherein said second member (22) further has a bracket (27) for attachment to a linear actuator to move the second member (22) and lens (26) along the lamp axis (12) relative to the first member (14).

## Patentansprüche

1. Linsenhalterung (10) zum Halten einer Linse (26) an einer Lampenanordnung in Ausrichtung mit einer Lampenachse (12) und zum Führen der Linse (26) für eine begrenzte Bewegung entlang der Lampenachse (12), während die Ausrichtung erhalten bleibt, mit:
einem ersten Bauteil (14), das an der Lampenanordnung befestigt ist und eine auf der Lampenachse (12) zentrierte, zylindrische äußere Oberfläche (20) definiert, wobei die äußere Oberfläche (20) bei einem ersten Radius (R₁) von der Lampenachse (12) definiert ist;
einem zweiten Bauteil (22), das eine zylindrische innere Oberfläche (24) definiert, die um eine Zentrallinie bei einem zweiten Radius (R₂) definiert ist, wobei die Linse (26) so an dem zweiten Bauteil (22) montiert ist, daß die optische Achse der Linse (26) mit der Zentrallinie der zylindrischen inneren Oberfläche (24) zusammenfällt;
einer Lageranordnung (28) mit einem ersten und mit einem zweiten Kugelhaltering (30, 32), die zwischen den zylindrischen Oberflächen (20, 24) des ersten und des zweiten Bauteils (14, 22) angeordnet sind, wobei die Kugelhalteringe (30, 32) sich entlang der Länge der Oberflächen (20, 24) auf Abstand befinden, um die Linse (26) mit der Lampenachse (12) auszurichten und die Linse (26) und das zweite Bauteil (22) für eine begrenzte Bewegung entlang der Lampenachse (12) relativ zu dem ersten Bauteil (14) zu führen, während die Ausrichtung erhalten bleibt;
wobei die Linsenhalterung dadurch gekennzeichnet ist, daß:
die Kugelhalteringe (30, 32) eine Anzahl von Lagerkugeln (34) haben, die zwischen den zylindrischen Oberflächen (20, 24) des ersten und des zweiten Bauteils (14, 22) angeordnet sind; und
die Lagerkugeln (34) elastisch deformierbar sind und einen Durchmesser haben, der geringfügig großer ist als die Differenz zwischen dem zweiten Radius (R₂) und dem ersten Radius (R₁), um eine elastische Deformation der Lagerkugeln (34) zwischen den zylindrischen Oberflächen (20, 24) des ersten und des zweiten Bauteils (14, 22) herbeizuführen.

2. Linsenhalterung (10) nach Anspruch 1, worin der erste und der zweite Kugelhaltering (30, 32) als eine integrale Einheit gebildet sind.

3. Linsenhalterung (10) nach Anspruch 1, worin sowohl der erste als auch der zweite Kugelhaltering (30, 32) eine elastische Lagerkugel-Haltestruktur zum Halten der Lagerkugeln (34) enthält.

4. Linsenhalterung (10) nach Anspruch 1, worin die Anzahl der Lagerkugeln (34) entlang den zylindrischen Oberflächen (20, 24) rollt, wenn das zweite Bauteil (22) relativ zu dem ersten Bauteil (14) bewegt wird, wobei die Ausrichtung der Linse (26) und des zweiten Bauteils (22) entlang der Lampenachse (12) bewahrt bleibt.

5. Linsenhalterung (10) nach Anspruch 1, worin die Lagerkugeln (34) aus Nylon gebildet sind.

6. Linsenhalterung (10) nach Anspruch 1, worin das zweite Bauteil (22) ferner einen Arm (27) zur Anbringung an einem linearen Stellglied hat, um das zweite Bauteil (22) und die Linse (26) entlang der Lampenachse (12) relativ zu dem ersten Bauteil (14) zu bewegen.

## Revendications

1. Porte-lentille (10) destiné à porter une lentille (26) sur une structure de lampe en alignement avec un axe de lampe (12) et à guider la lentille (26) en vue d'un déplacement limité le long de l'axe (12) de la lampe tout en maintenant l'alignement, et comprenant : un premier organe (14) fixé à la structure de la lampe et définissant une surface cylindrique extérieure (20) centrée sur l'axe (12) de la lampe, ladite surface extérieure (20) étant définie par un premier rayon (Ri) à partir de l'axe (12) de la lampe ; un deuxième organe (22) définissant une surface cylindrique intérieure (24) définie autour d'une ligne centrale par un deuxième rayon (R₂), la lentille (26) étant montée sur le deuxième organe (22) et l'axe optique de la lentille (26) coïncidant avec la ligne centrale de la surface cylindrique intérieure (24) ; un ensemble formant palier (28) qui comprend des première et deuxième bagues de retenue des billes (30, 32) positionnées entre les surfaces cylindriques (20, 24) des premier et deuxième organes (14, 22), les bagues de retenue des billes (30, 32) étant espacées entre elles le long des surfaces (20, 24), afin d'aligner la lentille (26) sur l'axe (12) de la lampe et de guider la lentille (26) et le deuxième organe (22) en vue d'un déplacement limité le long de l'axe (12) de la lampe par rapport au premier organe (14), tout en maintenant l'alignement ; ledit porte-lentille étant caractérisé par le fait que lesdites bagues de retenue des billes (30, 32) comportent une pluralité de billes de roulement (34) positionnées entre les surfaces cylindriques (20, 24) des premier et deuxième organes (14, 22), que lesdites billes de roulement (34) sont élastiquement déformables, et qu'elles présentent un diamètre légèrement supérieur à la différence entre les deuxième et premier rayons (R₂, Rᵢ), afin de produire la déformation élastique des billes de roulement (34) entre les surfaces cylindriques (20, 24) des premier et deuxième organes (14, 22).

2. Porte-lentille (10) selon la revendication 1, dans lequel lesdites première et deuxième bagues de retenue des billes (30, 32) sont réalisées sous la forme d'un ensemble d'un seul tenant.

3. Porte-lentille (10) selon la revendication 1, dans lequel chacune desdites première et deuxième bagues de retenue des billes (30, 32) comprend une structure élastique de retenue des billes de roulement qui est destinée à maintenir les billes de roulement (34).

4. Porte-lentille (10) selon la revendication 1, dans lequel ladite pluralité de billes de roulement (34) roule sur les surfaces cylindriques (20, 24) lorsque le deuxième organe (22) est déplacé par rapport au premier organe (14), en maintenant l'alignement de la lentille (26) et du deuxième organe (22) le long de l'axe (12) de la lampe.

5. Porte-lentille (10) selon la revendication 1, dans lequel lesdites billes de roulement (34) sont constituées par du nylon.

6. Porte-lentille (10) selon la revendication 1, dans lequel ledit deuxième organe (22) comprend en outre une patte (27) qui est destinée à être fixée à un moteur à déplacement linéaire afin de déplacer le deuxième organe (22) et la lentille (26) le long de l'axe (12) de la lampe par rapport au premier organe (14).
